# EUROPÄISCHE PATENTSCHRIFT

(11) **EP 1 842 417 B1**
(45) Veröffentlichungstag und Bekanntmachung des Hinweises auf die Patenterteilung: **16.09.2009**
(21) Anmeldenummer: 07100729.8
(22) Anmeldetag: 18.01.2007
(51) Int. Cl.: A01F 15/07, A01F 15/08

(54) **Bindematerial zum Umhüllen von zu Großballen geformten und/oder gepresstem Gut**
Trussing material for wrapping bulk goods shaped and/or compressed into large bales
Matériau de jonction destiné à envelopper des matériaux formés et/ou pressés en grands ballons

(30) Priorität: 03.04.2006 DE 102006015854
(43) Veröffentlichungstag der Anmeldung: 10.10.2007
(73) Patentinhaber: CLAAS Selbstfahrende Erntemaschinen GmbH, 33428 Harsewinkel (DE)
(72) Erfinder: Frerichs, Ludger, Dr.,, 48336 Sassenberg (DE)

(56) Entgegenhaltungen:
- EP-A- 1 090 543
- EP-A1- 1 053 673
- EP-A1- 1 375 131
- US-A- 5 165 333
- US-B1- 6 478 229

## Beschreibung

Die Erfindung betrifft ein Bindematerial zum Umhüllen von mittels einer Ballenpresse zu Gutballen geformtem und/oder gepresstem Gut, wie etwa Erntegut oder Abfallmaterial.

Aus der EP 1 053 673 ist eine Anordnung zum Abspeichern von ballenspezifischen Daten bekannt Mit diversen Sensoren werden die Parameter des zu einem Ballen geformten und anschließend mit Garn umwickelten Erntegutes erfasst und per Funk auf einen Transponder übertragen. Der Transponder wird mit einer Vorrichtung in das Innere des Ballens gebracht, wobei die auf dem Transponder abgespeicherten Parameter mit einem Auslesegerät fernauslesbar sind.

Nachteilig bei dieser Vorrichtung ist, dass eine separate Einbringvorrichtung an der Ballenpresse erforderlich ist, die den Transponder in den Ballen einbringt. Desweiteren ist es erforderlich den Transponder vor dem Verfüttern des Ballens manuell aus dem Ballen herauszunehmen. Zudem haben Transponder in der Regel den Nachteil, dass sie zugleich über eine Energiequelle wie etwa eine Batterie verfügen müssen, die zu einer relativ großen Bauform derartiger Transponder führt.

Der Erfindung liegt daher die Aufgabe zugrunde, die Nachteile des Standes der Technik zu vermeiden und insbesondere ein Speichermedium derart am Ballen anzubringen, dass hierzu keine spezielle Vorrichtung erforderlich ist und das Speichermedium beim Auflösen des Ballens auf einfache Weise vom Ballen entfernbar ist.

Diese Aufgabe wird erfindungsgemäß durch die kennzeichnenden Merkmale des Anspruchs 1 gelöst Weitere vorteilhafte Wirkungen des Erfindungsgegenstandes ergeben sich aus den Unteransprüchen

Dadurch, dass wenigstens ein elektronisches Speichermedium in das Bindematerial integriert ist, wird das Speichermedium beim Binden des Gutballens mit dem Gutballen zusammengebracht und beim Entfernen des Bindematerials vom Gutballen zusammen mit diesem entfernt, wobei zusätzliche Maßnamen zur Entfernung des Speichermediums aus dem Gutballen nicht erforderlich sind,

In vorteilhafter Ausgestaltung der Erfindung ist das elektronische Speichermedium als Speicherchip ausgeführt, so dass Daten berührungslos von einer Übertragungsvorrichtung auf den Chip speicherbar und auf gleiche Weise von einem Auslesegerät auslesbar sind, In einer vorteilhaften Ausgestaltung der Erfindung ist der Speicherchip als RHO (Radio Frequency Identification)- Chip ausgebildet. Dies hat insbesondere den Vorteil, dass in den relativ rauen Bedingungen eine technisch ausgereifte, bewährte und kostgünstige Datenspeicher- und -wiedergabetechnotogie einsetzbar ist.

In einer vorteilhaften Ausgestaltung der Erfindung ist das Bindematerial als Garn ausgebildet, wobei das Speichermedium unmittelbar in das Garn eingewoben ist. Dies hat insbesondere den Vorteil, dass auch beim Einsatz von fadenförmigen Material, einer beim Bilden von Erntegutballen weit verbreiteten Technologie, dem jeweils umhüllten Ballen spezifische Informationen zugeordnet werden können, ohne das der Informationsträger in einem separaten Arbeitsgang aus dem Erntegutballen entfern werden muss. Eine besonders kostengünstige Ausgestaltung ergibt sich in diesem Zusammenhang dann, wenn beim Umhüllen des Gutballens mit mehreren Garnen das Speichermedium in nur eines der Garne integriert ist.

In einer weiteren vorteilhafter Ausgestaltung der Erfindung ist das Bindematerial als Netzstreifen ausgeführt, wobei das Speichermedium in das Bindematerial eingewoben ist, sodass auch beim Einsatz von so genanntem Netzbindematerial Informationen an den jeweiligen Gutballen gekoppelt werden können und die Entfernung der erforderlichen Speichermedien keine separaten Arbeitsgänge nach sich ziehen.

In einer weiteren erfindungsgemäßen Ausführung ist das Bindematerial als Kunststofffolie ausgeführt, wobei das Speichermedium beispielsweise durch Aufkleben oder Aufdrucken in die Kunststofffolie integriert ist. Auf diese Weise können die erfindungsgemäßen Effekte auch beim Einsatz von Kunststoffen als Bindematerial sichergestellt werden.

Dadurch, dass sich das Speichermedium farblich vom Bindematerial und/oder vom Erntegut unterscheidet, ist schnell feststellbar, an welcher Stelle des Ballenumfangs das Speichermedium angeordnet ist, sodass beim Auslesen von Informationen ein zeitaufwendiger Suchvorgang entfallen kann.

In vorteilhafter Ausgestaltung der Erfindung ist das Bindematerial auf eine Vorratsrolle aufwickelbar, wobei mehrere Speichermedien in Wickelrichtung der Vorratsrolle in Abständen voneinander entfernt in das Bindematerial integriert sind, so dass jeder von einem Abschnitt des Bindematerials gebundene Gutballen mit zumindest einem Speichermedium versehen ist.

Dadurch, dass der Abstand der Speichermedien zueinander so gewählt ist, dass nach dem Binden des Gutballens mit einem Abschnitt des Bindematerials zumindest zwei Speichermedien auf dem Umfang des Gutballens angeordnet sind, ist eine Kennzeichnung des Ballens auch dann möglich, wenn ein Speichermedium beim Wickeln oder Schneiden des Bindematerials beschädigt wird oder bei Ablage des Gutballens an dessen Unterseite in einer nicht erreichbaren Position verharrt.

Dadurch, dass beim Ballenbildevorgang ballenspezifische Daten erfasst und über eine Datenübertragungsvorrichtung drahtlos auf die auf dem Umfang des Gutballens angeordneten Speichermedien übertragen werden, ist eine Rückverfolgung jedes einzelnen Gutballens anhand der auf dem Speichermedium gespeicherten Daten möglich,

Vorteilhafterweise beinhalten die ballenspezifischen Daten nachfolgende Handlingoperationen für den Gutballen; die Inhaltstoffe und die Feuchte des Gutes; die Masse, Größe und Dichte des Gutballens ; den Ort und die Zeit an dem der Gutballen erzeugt und/oder abgelegt wurde; den Maschinentyp mit dem der Gutballen erzeugt wurde ; den Ausführenden des Auftrags zur Ballenbildung sowie eine durch einen Zähler ermittelte Nummer für den Gutballen. Auf diese Weise wird die Qualität und Quantität des Gutes bestimmbar. Zudem ist feststellbar, welcher Behandlung der Gutballen unterzogen werden soll und/oder ob und wie der Gutballen transportiert werden und/oder wie und wo der Gutballen gelagert werden soll.

In einer vorteilhaften Ausgestaltung der Erfindung umfassen die ballenspezifischen Daten editierbare oder nicht editierbare Daten. Dies hat insbesondere den Vorteil, dass in dem Speichermedium einerseits das Ballenhandling bestimmende an verschiedenste Randbedingungen anpassbare Daten sowie nicht änderbare Daten für Dokumentationszwecke, wie etwa gesetzliche Bestimmungen zur Rückverfolgung vor allem von landwirtschaftlichen Erntegütern, hinterlegt werden können,

In einer vorteilhaften Ausgestaltung der Erfindung wird ein Gutballen vorgeschlagen, bei dem auf den am Umfang des Gutballens angeordneten Speichermedien nach dem Umhüllungsvorgang und unabhängig von der Ballenpresse Daten editierbar hinterlegt und wieder abgerufen werden können. Dies hat insbesondere den Vorteil, dass dem Guthaben über seine gesamte Lebensdauer Informationen zugeordnet und wieder abgerufen werden können. Eine besonders vorteilhafte Ausgestaltung der Erfindung ergibt sich in diesem Zusammenhang dann, wenn weitere den Gutballen aufnehmende Maschinensysteme Daten an die Speichermedien übergeben und von den Speichermedien abrufen können,

In einer weiteren vorteilhaften Ausgestaltung der Erfindung wird eine Ballenpresse zum Umhüllen von Gutballen mit Bindematerial vorgeschlagen, wobei in erfindungsgemäßer Weise eine Vielzahl von Speichermedien in das jeweilige Bindematerial integriert sind.

Weitere vorteilhafte Ausgestaltungen sind Gegenstand weiterer Unteransprüche und werden nachfolgend an Hand des in mehreren Figuren dargestellten Ausführungsbeispiels näher erläutert

Es zeigen:
- Fig.1: eine Rundballenpresse zum Herstellen von Erntegutballen
- Fig. 2: eine Vorratsrolle mit einem erfindungsgemäßen Bindematerial,
- Fig. 3: einen mit dem erfindungsgemäßen Bindematerial gebundenen Erntegutballen.

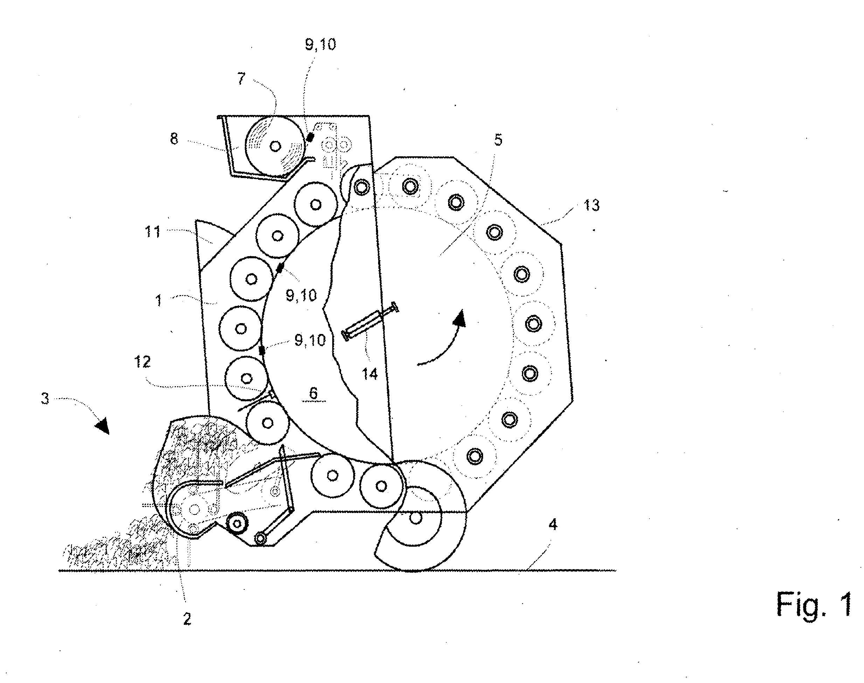

Fig.1 zeigt eine an sich bekannte Rundballenpresse 1, Die Rundballenpresse 1 weist eine Pickup-Vorrichtung 2 auf, mit der das Erntegut 3 während der Erntefahrt vom Feld 4 aufgesammelt wird, Das aufgenommene Erntegut 3 wird einem Ballenpressraum 5 mit unveränderbarer Größe zugeführt, Innerhalb dieses Ballenpressraums 5 wird das Erntegut 3 zu einem Erntegutballen 6 geformt und gepresst. Um den Verbund des Erntegutballens 6 zu sichern wird das gepresste Erntegut 3 anschließend im Ballenpressraum 5 mit einem Abschnitt eines Bindematerials 7 umwickelt, das in einem Behälter 8 an der Rundballenpresse 1 bevorratet wird,
In das an späterer Stelle noch näher erläuterte Bindematerial 7 sind erfindungsgemäß mehrere als Speicherchips 9 ausgeführte elektronische Speichermedien 10 integriert, so dass nach dem Binden des Erntegutes 3 wenigstens ein Speicherchip 9 auf dem Umfang des Erntegutballen 6 angeordnet ist, auf dem Daten gespeichert werden können.
Während des Ballenbildevorgangs in der Rundballenpresse 1 werden über an sich bekannte und daher hier nicht näher erläuterte, an der Rundballenpresse 1 angeordnete Sensoren ballenspezifische Daten wie beispielsweise die Inhaltsstoffe und die Feuchte des Erntegutes 3 und die Größe, die Masse und die Dichte des fertigen Erntegutballens 6 ermittelt und an eine Auswerteeinheit 11 übermittelt. Die ballenspezifischen Daten können zudem Informationen über den Ort und die Zeit an dem der Gutballen 6 erzeugt und/oder abgelegt wurde; den Maschinentyp mit dem der Gutballen 6 erzeugt wurde; den Ausführenden des Auftrags zur Ballenbildung sowie eine durch einen Zähler ermittelte Nummer für den Gutballen 6 umfassen, indem alte oder ein Auswahl dieser ballenspezifischen Informationen in dem oder den Speichermedien 10 wieder abrufbar hinterlegt werden, wird in noch näher zu beschreibender Weise die Möglichkeit geschaffen, dass einerseits die Ballenrückverfolgung einfach umgesetzt werden kann und zudem die weitere Ballenlogistik, auf diese ballenspezifischen Informationen abstimmbar ist.

Gemäß Figur 1 umfasst die Ballenpresse 1 eine Auswerteeinheit 11 in der aus den sensorisch ermittelten ballenspezifischen Daten nachfolgende Handlingsoperationen wie zum Beispiel die weitere Behandlung oder die Verbringung des Erntegutballens 6 abgeleitet werden. Die Auswerteeinheit 11 ist mit einer Übertragungseinrichtung 12 verbunden, die im Bereich des Ballenpressraums 5 der Rundballenpresse 1 angeordnet ist. Die Übertragungsvorrichtung 12 übertragt die ballenspezifischen Daten sowie die daraus generierten Handlingoperationen drahtlos an die auf dem Umfang des Erntegutballens 6 angeordneten Speicherchips 9.

Nachdem der Erntegutballen 6 gebunden ist und die Daten auf die Speichermedien 10 übertragen worden sind, wird die Heckklappe 13 der Rundballenpresse 1 mittels Hydraulikzylindern 14 geöffnet und der Erntegutballen 6 wird aus dem Ballenpressraum 5 hinausgefördert und auf dem Feld 4 abgelegt.

Es liegt im Rahmen der Erfindung, dass an Stelle des in Figur 1 dargestellten Aufsammelns und Verpressens von auf einem Feld 4 liegenden Erntegut 3 zu Gutballen 6 auch Gutballen 6 aus Abfallmaterial bestehend mit einer geeigneten, an sich bekannten und deshalb nicht näher dargestellten Rundballenpresse hergestellt werden können, wobei die so entstehenden Gutballen 6 dann ebenfalls in der beschriebenen Weise mit dem erfindungsgemäßen Bindematerial 7 umhüllt werden.

Eine technisch besonders bewährte Ausgestaltung der Erfindung ergibt sich dann, wenn die Speicherchips (9) als so genannte RRD (Radio Frequency Identification) - Chips ausgebildet sind. Derartige Chips sind kostengünstig und einfach herstellbar und benötigen keinen integrierten Energiespeicher, da das Übertragen von Informationen auf den Chip und das Auslesen von auf dem Chip gespeicherten informationen durch separate Lese- und Schreibgeräte erfolgt, die zugleich die erforderlichen Energiespeicher zur Datenübertragung umfassen.

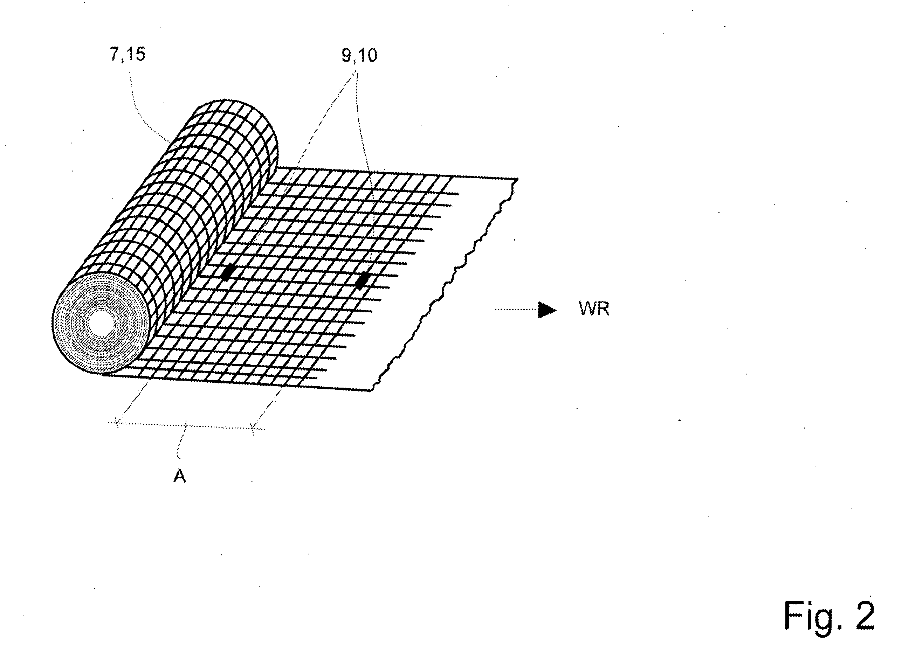

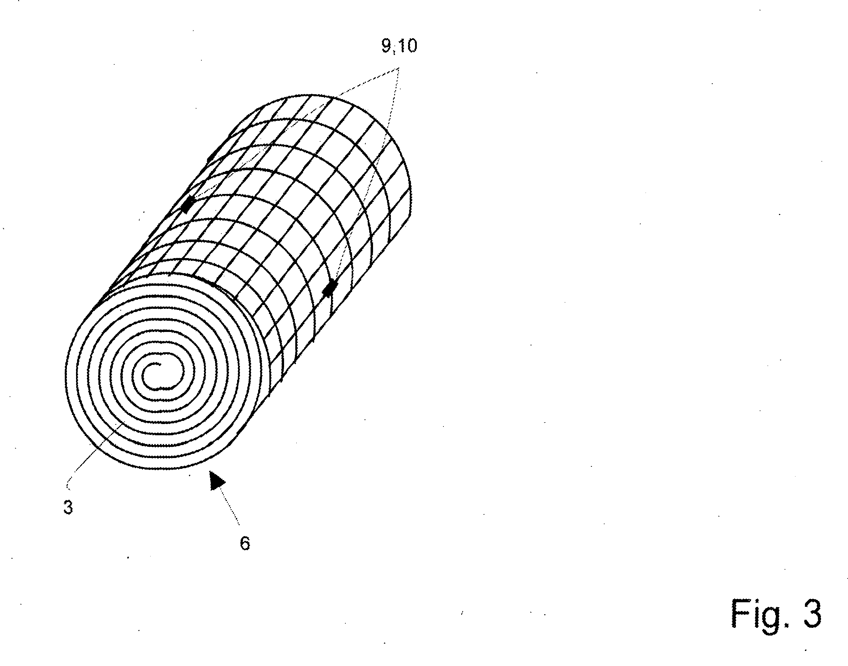

Fig.2 zeigt eine Vorratsrolle 15 mit einem darauf aufgewickelten als Netzstreifen 16 ausgeführten erfindungsgemäßen Bindematerial 7, Die elektronischen Speichermedien 10 sind in Wickelrichtung WR des Netzstreifens 16 in gleichmäßigen Abständen A voneinander entfernt in den Netzstreifen 16 eingewoben, wobei der Abstand A so gewählt ist, dass nach dem Binden des Erntegutballens 6 zumindest zwei Speichermedien 10 auf dem Umfang des Erntegutballens 6 angeordnet sind (siehe Fig. 3). Aus dem Stand der Technik sind auch Ballenpressen bekannt, bei denen als Bindematerial 7 zumindest zwei Garne verwendet werden, die gleichzeitig jeweils in Teilbereichen um den Erntegutballen 6 gewickelt werden und dadurch zusammen eine netzartige Bindung ergeben. Bei dieser Ausführung des Bindematerials 7 ist es nach der Erfindung ausreichend, wenn in nur einem Garn die erfindunsgemäßen Speichermedien 10 eingewoben sind, Es liegt im Rahmen der Erfindung, dass das Bindematerial 7 auch als Kunststofffolie ausgeführt sein kann, in die die erfindungsgemäßen Speichermedien 10 im einfachsten Fall durch Aufkleben oder Aufdrucken integriert sind. Die Speichermedien 10 der jeweiligen Bindematerialien 7 unterscheiden sich zudem zur besseren Erkennung farblich von dem jeweiligen Bindematerial 7 beziehungsweise vom zu bindenden Erntegut 3. Die in den Figuren dargestellten Abstände A sind nur schematisch und beispielhaft, In einer besonders bevorzugten Ausführung sind die Abstände A benachbarter Speichermedien 10 so groß gewählt, dass zumindest stets ein Speichermedium 10 zugänglich ist, sodass auch dann Informationen von dem Erntegutballen 6 gelesen oder an diesen übergeben werden können, wenn ein Speichermedium 10 im Bereich der Ballenauflagefläche positioniert und damit unzugänglich ist. Zugleich kann aber auch vorgesehen sein, dass die Abstände A auf die jeweils mit dem Bindematerial 7 zu umhüllenden Ballendurchmesser abgestimmt sind, Im einfachsten Fall kann dies dadurch sichergestellt werden, dass das Bindematerial 7 speziell für definierte Ballendurchnesser hergestellt wird oder Speichermedien 10 in Abhängigkeit von dem an der jeweiligen Ballenpresse 1 vorgewählten Ballendurchmesser unmittelbar auf der Ballenpresse 1 selbst in das Bindematerial 7 integriert werden, In einer weiteren vorteilhaften Ausgestaltung kann auch vorgesehen sein, dass eine Vielzahl von Speichermedien 10 nach Umhüllung eines Gutballens 6 an dessen Umfangsfläche positioniert sind, Obgleich dies einerseits wegen der größeren Anzahl von integrierten Speichermedien die Kosten für das Bindematerial 7 erhöht wird andererseits jedoch sichergestellt, dass stets zumindest ein Speichermedium 10 in einer gut zugänglichen Position auf der Umfangsfläche des Gutballens 6 positioniert ist, sodass das Beschreiben und Auslesen der Speichermedien 10 auf einfache Weise durchführbar ist.

Die Speichermedien 10 können zudem so strukturiert sein, dass die auf ihnen speicherbaren Daten entweder editierbar oder nicht editierbar auf dem jeweiligen Speichermedium 10 hinterlegt sind. Im einfachsten Fall ist dann der jeweilige Speicherchip 9 in an sich bekannter Weise in Speicherbereiche unterteilt, die entweder überschreibgeschützt oder editierbar sind. Dies ist insbesondere dann erforderlich, wenn einerseits Daten zur Erntegutrückverfolgung aufgezeichnet werden sollen, deren spätere Anpassung ausgeschlossen sein muss und zum anderen ballenspezifische, insbesondere ballenlogistische Daten an sich ändernde Randbedingungen anpassbar sein sollten, Die Editierbarkeit der in den Speichermedien hinterlegten ballenspezifischen Daten hat insbesondere dann eine große Bedeutung, wenn sich auf den jeweiligen Gutballen 6 bezogen der empfangende Endkunde oder die Zwischenlagerposition ändern, In diesem Zusammenhang ist es auch von erheblicher Bedeutung, dass weitere Maschinensysteme der vollständigen Ballenlogistikkette, wie etwa Transportfahrzeuge sowie Lagereingangs- und ausgangskontrollsysteme berechtigt sein sollten, weitere Informationen in den jeweiligen Speichermedien 10 der Gutballen 6 zu hinterlegen,

Die Verwendung des erfindungsgemäßen Bindematerials 7 ist nicht auf die hier dargestellte Rundballenpresse beschränkt sondern auch für Rundballenpressen mit veränderlichem Ballenpressraum oder Quaderballenpressen einsetzbar.

Es liegt im Rahmen des Könnens eines Fachmannes die beschriebenen Ausführungsbeispiele in nicht dargestellter Weise abzuwandeln oder in anderen Maschinensystemen einzusetzen, um die beschriebenen Effekte zu erzielen, ohne dabei den Rahmen der Erfindung zu verlassen,

### Bezugszeichenliste:

- 1: Rundballenpresse
- 2: Pick-Up
- 3: Erntegut
- 4: Feld
- 5: Ballenpressraum
- 6: Gutballen
- 7: Bindematerial
- 8: Behälter
- 9: Speicherchip
- 10: Speichermedium
- 11: Auswerteeinheit
- 12: Übertragungseinrichtung
- 13: Heckklappe
- 14: Hydraulikzylinder
- 15: Vorratsrolle
- 16: Netzstreifen

- A: Abstand
- WR: Wickelrichtung

## Patentansprüche

1. Bindematerial zum Umhüllen von mittels einer Ballenpresse zu Gutballen geformten und/oder gepressten Gut,
**dadurch gekennzeichnet, dass**
wenigstens ein elektronisches Speichermedium (10) in das Bindematerial (7) Integriert ist.

2. Bindematerial (7) nach Anspruch 1.
**dadurch gekennzeichnet**
**dass** das elektronische Speichermedium (10) als Speicherchip (9) ausgebildet ist.

3. Bindematerial nach einem der vorhergehenden Ansprüche,
**dadurch gekennzeichnet,**
**dass** der Speicherchip (9) von einem RFID (Radio Frequency Identification)-Chip gebildet wird.

4. Bindematerial nach einem der vorhergehenden Ansprüche,
**dadurch gekennzeichnet**
**dass** das Bindematerial (7) als Garn ausgebildet und das Speichermedium (10) in das Garn eingewoben ist.

5. Bindematerial nach Anspruch 4,
**dadurch gekennzeichnet,**
**dass** beim Umhüllten des Gutballens (6) mit mehreren Garnen in nur einem der Garne das Speichermedium (10) integriert ist.

6. Bindematerial nach einem der Ansprüche 1 bis 3,
**dadurch gekennzeichnet,**
**dass** das Bindematerial (7) als Netzstreifen (16) ausgebildet ist und das Speichermedium (10) in den Netzstreifen (16) eingewoben ist.

7. Bindematerial nach einem der Ansprüche 1 bis 3,
**dadurch gekennzeichnet,**
**dass** das Bindematerial (7) als eine Kunststofffolie ausgebildet ist und das Speichermedium (10) in die Kunststoffolie integriert ist.

8. Bindematerial nach Anspruch 7,
**dadurch gekennzeichnet,**
**dass** das Speichermedium auf die Kunststofffolie aufgeklebt oder aufgedruckt ist.

9. Bindematerial nach wenigstens einem der vorhergehenden Ansprüche,
**dadurch gekennzeichnet,**
**dass** sich das Speichermedium (10) farblich vom Bindematerial (7) und/oder vom Erntegut (3) unterscheidet.

10. Bindematerial nach einem der vorhergehenden Ansprüche,
**dadurch gekennzeichnet,**
**dass** das Bindematerial (7) auf eine Vorratsrolle (15) aufwickelbar ist, wobei mehrere Speichermedien (10) in Wickelrichtung (WR) der Vorratsrolle (15) in Abstanden (A) voneinander entfernt in das Bindematerial (7) integriert sind.

11. Bindematerial nach einem der vorhergehenden Ansprüche,
**dadurch gekennzeichnet,**
**dass** der Abstand (A) der Speichermedien (10) zueinander so gewählt ist, dass nach dem Binden des Gutballens (6) mit einem Abschnitt des Bindematerials (7) zumindest zwei Speichermedien (9) auf dem Umfang des Gutballens (6) angeordnet sind.

12. Bindematerial nach einem der vorhergehenden Ansprüche,
**dadurch gekennzeichnet,**
**dass** die ballenspezifischen Daten nachfolgende Handlingoperationen für den Gutballen (6); die Inhaltstoffe und die Feuchte des Gutes (3); die Masse, Größe und Dichte des Gutballens (6); den Ort und die Zeit an dem der Gutballen (6) erzeugt und/oder abgelegt wurde; den Maschinentyp mit dem der Gutballen (6) erzeugt wurde; den Ausführenden des Auftrags zur Ballenbildung sowie eine durch einen Zähler ermittelte Nummer für den Gutballen (6) beinhalten könnten.

13. Bindematerial nach einem der vorhergehenden Ansprüche,
**dadurch gekennzeichnet,**
**dass** die ballenspezifischen Daten editierbare oder nicht editierbare Daten umfassen können.

14. Gutballen umhüllt mit einem Bindematerial nach einem der vorhergehenden Ansprüche
**dadurch gekennzeichnet,**
**dass** auf den am Umfang des Gutballens (6) angeordneten Speichermedien (10) nach dem Umhüllungsvorgang und unabhängig von der Ballenpresse (1) Daten editierbar hinterlegt und wieder abgerufen werden können.

15. Gutballen nach Anspruch 14,
**dadurch gekennzeichnet,**
**dass** weitere den Gutballen (6) aufnehmende Maschinensysteme Daten an die Speichermedien (10) übergeben und von den Speichermedien (10) abrufen können.

16. Verwendung von Bindematerial nach einem der Ansprüche 1 bis 13 in einer Ballenpresse (1) mit wenigstens einer das Bindematerial aufweisenden Vorratsrolle (15) zum Binden von Erntegutballen.

17. Verwendung von Bindmaterial nach Anspruch 16,
**dadurch gekennzeichnet,**
**dass** beim Ballenbildevorgang ballenspezifische Daten erfasst und durch eine Übertragungsvorrichtung (12) drahtlos auf die auf dem Umfang des Gutballens (6) angeordneten Speichermedien (10) übertragen werden.

## Claims

1. A binding material for wrapping material which is shaped and/or pressed into material bales by means of a bale press,
**characterised in that**
at least one electronic memory medium (10) is integrated into the binding material (7).

2. A binding material (7) according to claim 1 **characterised in that** the electronic memory medium (10) is in the form of a memory chip (9).

3. A binding material according to one of the preceding claims **characterised in that** the memory chip (9) is formed by an RFID (radio frequency identification) chip.

4. A binding material according to one of the preceding claims **characterised in that** the binding material (7) is in the form of twine and the memory medium (10) is woven into the twine.

5. A binding material according to claim 4 **characterised in that** when wrapping the material bale (6) with a plurality of twines the memory medium (10) is integrated into only one of the twines.

6. A binding material according to one of claims 1 to 3 **characterised in that** the binding material (7) is in the form of mesh strip (16) and the memory medium (10) is woven into the mesh strip (16).

7. A binding material according to one of claims 1 to 3 **characterised in that** the binding material (7) is in the form of a plastic film and the memory medium (10) is integrated into the plastic film.

8. A binding material according to claim 7 **characterised in that** the memory medium is stuck on to or printed on the plastic film.

9. A binding material according to at least one of the preceding claims **characterised in that** the memory medium (10) differs in colour from the binding material (7) and/or the crop material (3).

10. A binding material according to one of the preceding claims **characterised in that** the binding material (7) can be wound up on to a supply roll (15), wherein a plurality of memory media (10) are integrated into the binding material (7) spaced from each other at spacings (A) in the winding direction (WR) of the supply roll (15).

11. A binding material according to one of the preceding claims **characterised in that** the spacing (A) of the memory media (10) relative to each other is so selected that after binding of the material bale (6) with a portion of the binding material (7) at least two memory media (9) are arranged on the periphery of the material bale (6).

12. A binding material according to one of the preceding claims **characterised in that** the bale-specific data can include subsequent handling operations for the material bale (6); the substances contained in and the moisture content of the material (3); the mass, size and density of the material bale (6); the location and time at which the material bale (6) was produced and/or deposited; the type of machine with which the material bale (6) was produced; the person performing the order for bale binding, and a number produced by a counter for the material bale (6).

13. A binding material according to one of the preceding claims **characterised in that** the bale-specific data can include editable or non-editable data.

14. A material bale wrapped with a binding material according to one of the preceding claims **characterised in that** data can be editably stored on and retrieved again from the memory media (10) arranged at the periphery of the material bale (6), after the wrapping operation and independently of the bale press (1).

15. A material bale according to claim 14 **characterised in that** further machine systems picking up the material bale (6) can transfer data to the memory media (10) and can retrieve same from the memory media (10).

16. Use of binding material according to one of claims 1 to 13 in a bale press (1) with at least one supply roll (15) having the binding material, for binding crop material bales.

17. Use of binding material according to claim 16 **characterised in that** bale-specific data are detected in the bale-forming operation and are transmitted wirelessly by a transmission device (12) to the memory media (10) arranged on the periphery of the material bale (6).

## Revendications

1. Matériau de liage servant à envelopper un produit formé et/ou pressé en balles au moyen d'une presse à balles, **caractérisé en ce qu'**au moins un support de stockage électronique (10) est intégré dans le matériau de liage (7).

2. Matériau de liage (7) selon la revendication 1,
**caractérisé en ce que** le support de stockage électronique (10) est réalisé sous la forme d'une puce de mémoire (9).

3. Matériau de liage selon l'une des revendications précédentes, **caractérisé en ce que** la puce de mémoire (9) est formée par une puce RFID (Radio Frequency Identification).

4. Matériau de liage selon l'une des revendications précédentes, **caractérisé en ce que** le matériau de liage (7) est réalisé sous la forme d'un fil et le support de stockage (10) est tissé dans le fil.

5. Matériau de liage selon la revendication 4, **caractérisé en ce que**, en cas d'enveloppement de la balle de produit (6) avec plusieurs fils, le support de stockage (10) n'est intégré que dans un seul des fils.

6. Matériau de liage selon l'une des revendications 1 à 3, **caractérisé en ce que** le matériau de liage (7) est réalisé sous la forme d'une bande réticulée (16) et le support de stockage (10) est tissé dans la bande réticulée (16).

7. Matériau de liage selon l'une des revendications 1 à 3, **caractérisé en ce que** le matériau de liage (7) est réalisé sous la forme d'une feuille en matière plastique et le support de stockage (10) est intégré dans la feuille en matière plastique.

8. Matériau de liage selon la revendication 7, **caractérisé en ce que** le support de stockage est collé ou imprimé sur la feuille en matière plastique.

9. Matériau de liage selon au moins l'une des revendications précédentes, **caractérisé en ce que** le support de stockage (10) diffère par la couleur du matériau de liage (7) et/ou du produit de récolte (3).

10. Matériau de liage selon l'une des revendications précédentes, **caractérisé en ce que** le matériau de liage (7) peut être enroulé sur une bobine d'alimentation (15), plusieurs supports de stockage (10) étant intégrés dans le matériau de liage (7) à distance (A) les uns des autres dans le sens d'enroulement (WR) de la bobine d'alimentation (15).

11. Matériau de liage selon l'une des revendications précédentes, **caractérisé en ce que** la distance (A) des supports de stockage entre eux est choisie de manière que, après le liage de la balle de produit (6) avec une portion du matériau de liage (7), au moins deux supports de stockage (9) soient disposés sur la circonférence de la balle de produit (6).

12. Matériau de liage selon l'une des revendications précédentes, **caractérisé en ce que** les données spécifiques à une balle peuvent concerner des opérations de manipulation ultérieures de la balle de produit (6) ; les composants et l'humidité du produit (3) ; la masse, la taille et la densité de la balle de produit (6) ; le lieu et l'heure auxquels la balle de produit (6) a été produite et/ou déposée ; le type de machine avec lequel la balle de produit (6) a été produite ; l'exécutant de la commande de formation de la balle ainsi qu'un numéro de la balle de produit (6) déterminé par un compteur.

13. Matériau de liage selon l'une des revendications précédentes, **caractérisé en ce que** les données spécifiques à une balle peuvent comprendre des données éditables ou non éditables.

14. Balle de produit enveloppée avec un matériau de liage selon l'une des revendications précédentes, **caractérisée en ce que**, après le processus d'enveloppement et indépendamment de la presse à balles (1), des données peuvent être enregistrées et de nouveau lues sur les supports de stockage (10) disposés sur la circonférence de la balle de produit (6).

15. Balle de produit selon la revendication 14, **caractérisée en ce que** d'autres systèmes mécaniques prenant en charge la balle de produit (6) peuvent transmettre des données aux supports de stockage (10) et les lire depuis les supports de stockage (10).

16. Utilisation de matériau de liage selon l'une des revendications 1 à 13 dans une presse à balles (1) comportant au moins une bobine d'alimentation (15) garnie du matériau de liage pour lier des balles de produit de récolte (6).

17. Utilisation de matériau de liage selon la revendication 16, **caractérisée en ce que**, lors du processus de formation de la balle, des données spécifiques à la balle sont saisies et transmises sans fil par l'intermédiaire d'un dispositif de transmission (12) aux supports de stockage (10) disposés sur la circonférence de la balle de produit (6).
